# FASCICULE DE BREVET EUROPEEN

(11) **EP 2 854 612 B1**
(45) Date de publication et mention de la délivrance du brevet: **17.02.2016**
(21) Numéro de dépôt: 13729980.6
(22) Date de dépôt: 16.05.2013
(51) Int. Cl.: A47J 45/06, A47J 36/00

(54) **ARTICLE CULINAIRE MUNI D'UN THERMOCOUPLE**
KOCHARTIKEL MIT EINER WÄRMEKOPPLUNGSVORRICHTUNG
CULINARY ARTICLE PROVIDED WITH A THERMOCOUPLE DEVICE

(30) Priorité: 31.05.2012 FR 1255050
(43) Date de publication de la demande: 08.04.2015
(73) Titulaire: SEB S.A., 69130 Ecully (FR)
(72) Inventeur: LINGLIN, Benoît, F-74370 Saint Martin Bellevue (FR)
(74) Mandataire: Bourrières, Patrice
(86) Numéro de dépôt international: PCT/FR2013/051084
(87) Numéro de publication internationale: WO 2013/178908

(56) Documents cités:
- EP-A1- 0 648 459
- EP-A1- 0 931 495
- EP-A1- 2 361 538
- DE-A1-102007 054 022
- US-A- 5 620 255

## Description

La présente invention concerne un article culinaire destiné à la cuisson d'aliments notamment une poêle, une casserole, une sauteuse, un faitout ou un autocuiseur comportant un thermocouple permettant de mesurer la température de cuisson.

On connaît du document EP0931495 un article culinaire comportant un fond et une paroi latérale, un thermocouple intégré dans le fond et relié à un circuit électronique pour traiter la grandeur mesurée par le thermocouple et afficher la température. Le thermocouple comporte deux fils conducteurs munis d'une gaine d'isolation électrique qui s'étendent entre une surface extérieure de la paroi qui constitue le fond et une plaque perforée fixée par frappe à froid sur la paroi. La surface extérieure de la paroi comporte une rainure qui reçoit les deux fils conducteurs. La rainure présente une profondeur supérieure au diamètre des fils conducteurs munis de la gaine d'isolation électrique.

Ainsi, les fils conducteurs dont le diamètre est supérieur à un millimètre imposent de réaliser une rainure profonde notamment par usinage qui est une opération complexe et couteuse. Cette réalisation du thermocouple nécessite également d'avoir une calotte d'épaisseur importante pour réaliser la rainure. De plus, la connexion des fils conducteurs au circuit électronique doit être réalisée par soudage qui est une opération complexe et couteuse, ou à l'aide de moyens de connexion supplémentaires qui augmentent le cout de l'article culinaire. Enfin, après une opération d'usinage, il peut subsister des copeaux qui peuvent blesser la gaine isolante des fils conducteurs et poser des problèmes de fiabilité de fonctionnement du thermocouple.

Le but de la présente invention est de remédier aux inconvénients précités et de proposer un article culinaire muni d'un thermocouple qui soit de conception simple et économique à mettre en oeuvre.

Un autre but de l'invention est de proposer un article culinaire muni d'un thermocouple qui présente un fonctionnement fiable.

Ces buts sont atteints avec un article culinaire comportant une calotte comprenant un fond et une paroi latérale, une plaque perforée fixée sur une face externe de la calotte et un thermocouple comportant deux éléments conducteurs isolés et agencés entre la face externe de la calotte et la plaque perforée, ledit thermocouple s'étendant du fond vers la paroi latérale, caractérisé en ce que les deux éléments conducteurs sont constitués par deux lames métalliques présentant une section rectangulaire d'épaisseur e comprise entre 0,1 et 0,5 millimètre.

Les deux lames métalliques sont donc extrêmement fines et peuvent être insérées simplement lors du process de fabrication entre la face externe de la calotte et la plaque perforée.

De préférence, l'épaisseur e des lames métalliques est égale à 0,3 millimètre.

Avantageusement, la section rectangulaire des lames métalliques présente une largeur l et le rapport l/e est supérieur à 5, de préférence supérieur à 7.

Cette disposition permet d'obtenir une lame métallique rigide qui ne se déforme pas suite à une sollicitation dans le sens de la largeur. Ainsi on obtient un élément conducteur beaucoup plus facile à manipuler lors des opérations de fabrication du thermocouple et de l'article culinaire. En particulier, la lame métallique posée à plat occupe la même position.

Avantageusement, les deux lames métalliques sont agencées dans une rainure de réception réalisée sur la face externe de la calotte par une opération de frappe.

La rainure de réception des deux lames métalliques extrêmement fines, formant le thermocouple, est très peu profonde. La réalisation d'une rainure peu profonde dans la calotte par une opération de frappe est simple et économique. C'est une opération simple car il y a très peu de fluage de matière, donc pas de déformation de la calotte.

De préférence, les deux lames métalliques du thermocouple sont agencées cote à cote dans la rainure.

Cette disposition permet d'obtenir une rainure très fine.

Avantageusement, le thermocouple comporte une zone de jonction des deux lames métalliques réalisée par soudure et les lames métalliques ainsi que la zone de jonction sont isolées électriquement par un matériau résistant à une température supérieure à 350°C, notamment du polytétrafluoroéthylène (PTFE).

Cette disposition permet d'obtenir un article culinaire dont le thermocouple supporte les températures de fonctionnement sur tous types de sources de chauffe, notamment à induction ou à gaz.

Cette disposition permet également d'obtenir un article culinaire dont le thermocouple supporte les agressions chimiques des agents lessiviels lors du lavage de l'article, notamment dans un lave vaisselle.

De préférence le matériau isolant électriquement les lames métalliques ainsi que la zone de jonction, est déposé par enduction.

Cette disposition permet d'obtenir une épaisseur du matériau isolant régulière et continue.

Avantageusement, les lames métalliques comportent deux extrémités libres munies de zones de contact électrique reliées à des bornes d'un circuit électronique qui traite la grandeur mesurée par le thermocouple et la convertit en une température, le circuit électronique étant agencé sur une poignée.

Les lames métalliques présentent une section qui permet d'obtenir une bonne rigidité, en particulier des extrémités libres. Ainsi, la liaison avec un circuit électronique est facilitée.

De préférence, la poignée comporte une extrémité fixée à la paroi latérale et les bornes du circuit électronique sont agencées à l'extrémité de la poignée.

Cette disposition permet de simplifier le process de fabrication de l'article culinaire. En effet, on peut réaliser un sous ensemble calotte, thermocouple, plaque perforée et un sous ensemble poignée, circuit électronique ; les deux sous-ensembles étant reliés mécaniquement et électriquement au même endroit, à l'extrémité de la poignée.

Avantageusement, les extrémités libres des lames métalliques comportent une succession de plis formant des moyens de rappel élastique des zones de contact à l'encontre des bornes.

Cette disposition permet de réaliser une connexion électrique simple et fiable, sans pièces ajoutées. La section des lames métalliques permet d'obtenir un bon effet ressort qui garantit une connexion fiable.

De préférence, les zones de contact des lames métalliques sont recouvertes d'un dépôt d'un matériau bon conducteur électrique résistant à la corrosion, notamment de l'or.

Cette disposition permet d'obtenir une connexion durable.

Avantageusement, l'article culinaire comporte deux thermocouples agencés dans la rainure, les lames métalliques isolées respectives des thermocouples étant superposées.

Les deux thermocouples permettent de mesurer un flux thermique et ainsi connaitre l'énergie fournie à l'article culinaire.

De préférence, l'article culinaire est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'un article culinaire selon un mode particulier de réalisation de l'invention.
- La figure 2 illustre une vue schématique du thermocouple agencé sur la plaque perforée avant leur fixation sur l'article culinaire illustré à la figure 1.
- La figure 3 illustre une vue schématique des extrémités libres des lames métalliques du thermocouple agencées sur la plaque perforée illustrée sur la figure 2.
- La figure 4 illustre une vue schématique du disque destiné à former la calotte de l'article culinaire de la figure 1, le disque comportant la rainure de réception du thermocouple.
- La figure 5 illustre une vue schématique de la rainure du disque suivant la ligne V - V illustrée sur la figure 4.
- La figure 6 illustre une vue schématique du disque de la figure 4 sur lequel est fixé la plaque perforée et le thermocouple de la figure 2.
- La figure 7 illustre une vue schématique du thermocouple agencé entre la calotte et la plaque perforée suivant la ligne VII - VII illustrée sur la figure 6.
- La figure 8 illustre une vue schématique partielle de la connexion électrique du thermocouple et du circuit électronique selon un mode particulier de réalisation de l'invention.

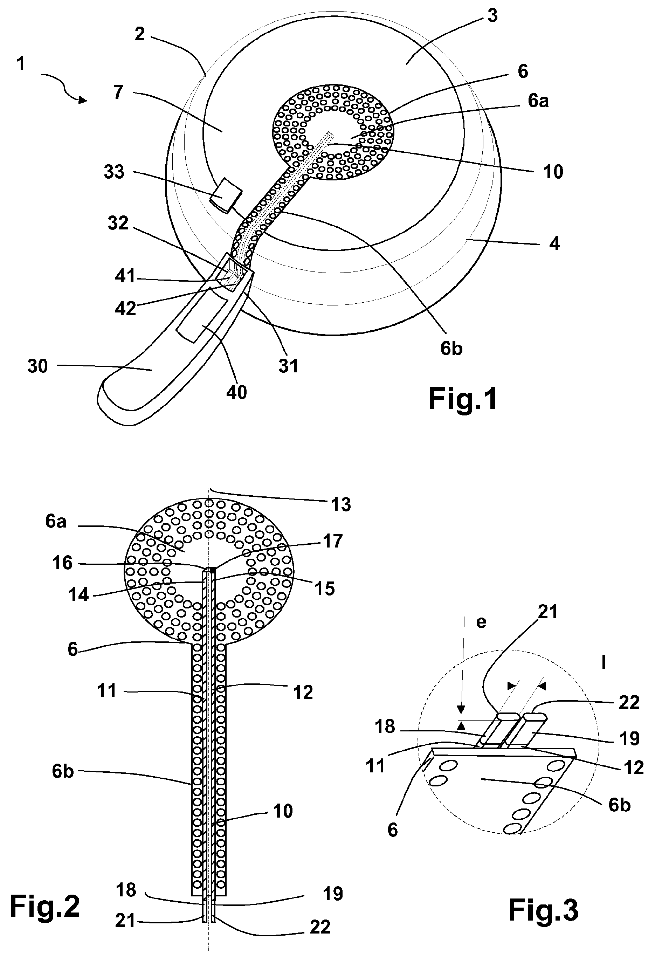

Selon un mode de réalisation visible à la figure 1, un article culinaire 1 comporte une calotte 2 comprenant un fond 3 et une paroi latérale 4. L'article culinaire 1 comporte une plaque perforée 6 fixée sur une face externe 7 de la calotte 2 et un thermocouple 10 agencé entre la face externe 7 de la calotte 2 et la plaque perforée 6. Le thermocouple 10 comporte deux lames métalliques 11, 12 conductrices isolées et soudées pour former une zone de jonction 17 visible figure 2. Les lames métalliques 11, 12 sont reliées électriquement à un circuit électronique 40 pour traiter la grandeur mesurée par le thermocouple 10 et afficher la température. Le thermocouple 10 s'étend radialement depuis le centre du fond 3 vers la paroi latérale 4. La plaque perforée 6 comporte une partie circulaire 6a qui recouvre la zone de jonction 17 ainsi qu'une partie centrale de la surface extérieure du fond 3 et une partie allongée 6b qui recouvre les lames métalliques 11, 12 et s'étend radialement sur la surface extérieure du fond 3 ainsi que partiellement sur la surface extérieure de la paroi latérale 4.

Les figures 2 et 3 illustrent le thermocouple 10 rapporté par exemple par collage sur la plaque perforée 6, avant leur fixation sur la calotte 2 de l'article culinaire 1. Les deux lames métalliques 11, 12 du thermocouple 10 s'étendent selon un axe longitudinal 13 et sont extrêmement fines. Chaque lame métallique 11, 12 présente une section rectangulaire sensiblement constante, d'épaisseur e comprise entre 0,1 et 0,5 millimètre, de préférence 0,3 millimètre et une largeur l comprise entre 0,5 et 5 millimètres, de préférence 2 millimètres.

Les deux lames métalliques 11, 12 sont constituées par deux matériaux différents et sont soudées ensemble par une de leur extrémité 14, 15. A titre d'exemple, le thermocouple 10 est du type J : une lame métallique 11 est en fer et l'autre lame métallique 12 est en Constantan. Pour réaliser la soudure, l'extrémité 14 de la lame métallique 11 est pliée pour former un retour 16 perpendiculaire à l'axe longitudinal 13. Les deux lames métalliques 11, 12 sont disposées cote à cote et le retour 16 est soudé sur l'extrémité 15 de la lame métallique 12 pour réaliser la zone de jonction 17. Les lames métalliques 11, 12 et la zone de jonction 17 sont enduites d'un matériau résistant à une température supérieure à 350°C, notamment du polytétrafluoroéthylène (PTFE) ou de l'émail pour former une isolation électrique (zone hachurée sur la figure 2). Les lames métalliques 11, 12 comportent deux extrémités libres 18, 19 (Figure 3) qui dépassent de la grille perforée 6 de 4 à 10 millimètres. Dans ce mode de réalisation, les deux extrémités libres 18, 19 sont recouvertes d'or et forment deux zones 21, 22 de contact électrique.

Dans une variante de réalisation, le matériau isolant électriquement les lames métalliques 11, 12 et la zone de jonction 17 est constitué d'un ruban en matériau résistant à des hautes températures, notamment du polytétrafluoroéthylène (PTFE). Le ruban peut comporter un adhésif.

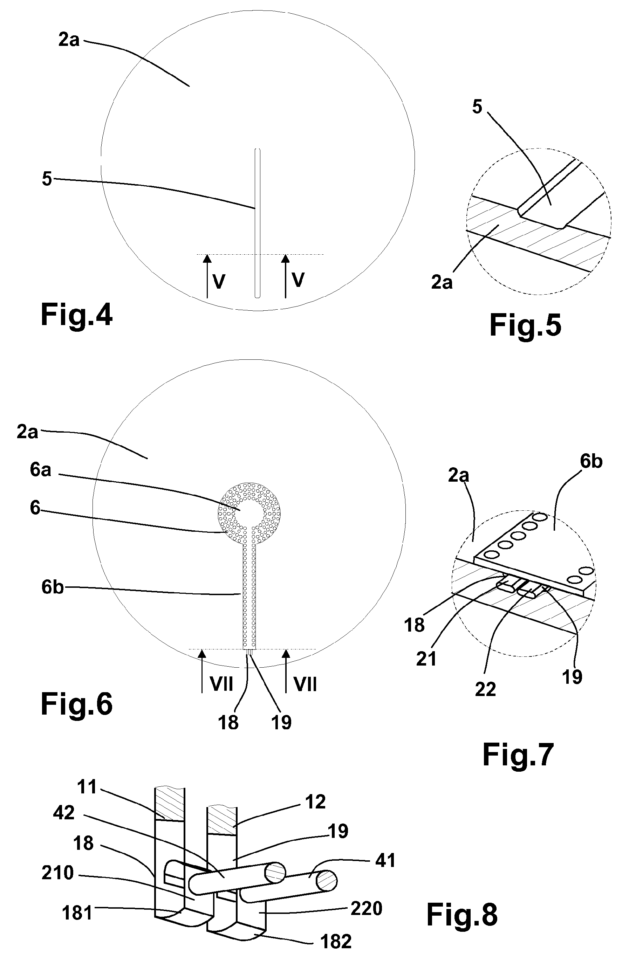

Conformément aux figures 4 et 5, la calotte 2 de l'article culinaire est réalisée à partir d'un disque 2a d'aluminium d'épaisseur comprise entre 2 et 6 millimètres. Une rainure 5, s'étendant radialement depuis le centre du disque 2a, est réalisée par une opération de frappe pour former un logement de réception du thermocouple 10. La profondeur de la rainure 5 correspond à l'épaisseur d'une lame métallique 11, 12 enduite de polytétrafluoroéthylène et la largeur de la rainure 5 correspond à la largeur des deux lames métalliques 11, 12 enduites disposées cote à cote. Le process de fabrication de la calotte 2 peut comporter, par exemple, une étape d'enduction du disque 2a muni de la rainure 5 avec du polytétrafluoroéthylène.

Conformément aux figures 6 et 7, la plaque perforée 6 munie du thermocouple 10 (Figure 2) est indexée sur le disque 2a de manière à ce que le thermocouple 10 soit positionné dans la rainure 5 puis la plaque perforée 6 est fixée sur le disque 2a par une opération de frappe. Pour comprendre le procédé de fixation de la plaque perforée 6 sur le disque 2a, on se rapportera à la description des brevets français n°FR 2 693 894 et n°FR 2 711 051. Le disque 2a ainsi muni de la grille perforée 6 et du thermocouple 10 est mis en forme par une opération de frappe pour constituer la calotte 2 de l'article culinaire 1 (Figure 1). La faible épaisseur des lames métalliques 11, 12 permet de mettre en forme facilement le thermocouple lors de cette opération de frappe.

Conformément à la figure 1, l'article culinaire 1 comporte une poignée 30 dont une extrémité 31 est fixée sur la paroi latérale 4 par des moyens de fixation (non représentés sur les figures). Le circuit électronique 40 est agencé dans la poignée 30 et est relié électriquement aux lames métalliques 11, 12 du thermocouple 10 par deux bornes 41, 42. L'extrémité 31 de la poignée 30 comporte un logement 32 dans lequel les extrémités libres 18, 19 sont reliées aux bornes 41, 42, par exemple par soudage. Le logement 32 est fermé par un capot 33 (représenté en écorché sur la figure 1).

Dans une variante de réalisation (figure 8), les extrémités libres 18, 19 sont mises en forme pour réaliser une connexion avec les bornes 41, 42 sans pièces ajoutées. Chaque extrémité libre 18, 19 comporte une succession de plis pour former sensiblement une boucle 181, 182 présentant une zone de contact 210, 220 sensiblement plane. La section et la matière des lames métalliques 11, 12 permettent d'obtenir un effet ressort lors de la déformation de la boucle 181, 182 par un appui sur la zone de contact 210, 220. Lorsque le circuit électronique 40 est assemblé dans la poignée 30, les bornes 41, 42 repoussent les zones de contact 210, 220. Les plis successifs assurent une pression de contact des zones de contact 210, 220 à l'encontre des bornes 41, 42 pour réaliser une bonne connexion électrique.

Avec ce type de connexion, le circuit électronique 40 muni des bornes 41, 42 peut être logé dans un boitier (non illustré sur les figures), détachable de la poignée 30. Ainsi, l'utilisateur peut enlever le boitier de la poignée 30 avant d'introduire l'article culinaire dans un bac de lavage ou dans un lave vaisselle.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la face externe 7 de la calotte 2 peut comporter deux rainures parallèles, chacune recevant une lame métallique 11, 12 du thermocouple 10.

Dans une autre variante de réalisation, la plaque perforée 6 pourra posséder un diamètre proche du diamètre du fond 3 et ainsi être adaptée à fonctionner sur un appareil de chauffage à induction.

Dans une autre variante de réalisation, la zone de jonction 17 peut être agencée sur le fond (3) de manière légèrement décentrée, par exemple à 50 millimètres par rapport au centre. Dans ce mode de réalisation, la partie circulaire 6a de la plaque perforée 6 peut prendre la forme d'une couronne.

## Revendications

1. Article culinaire (1) comportant une calotte (2) comprenant un fond (3) et une paroi latérale (4), une plaque perforée (6) fixée sur une face externe (7) de la calotte (2) et un thermocouple (10) comportant deux éléments conducteurs (11, 12) isolés et agencés entre la face externe (7) de la calotte (2) et la plaque perforée (6), ledit thermocouple (10) s'étendant du fond (3) vers la paroi latérale (4), **caractérisé en ce que** les deux éléments conducteurs sont constitués par deux lames métalliques (11, 12) présentant une section rectangulaire d'épaisseur e comprise entre 0,1 et 0,5 millimètre.

2. Article culinaire (1) selon la revendication 1, **caractérisé en ce que** l'épaisseur e des lames métalliques (11, 12) est égale à 0,3 millimètre.

3. Article culinaire (1) selon l'une des revendications 1 à 2, **caractérisé en ce que** la section rectangulaire des lames métalliques (11, 12) présente une largeur l et **en ce que** le rapport l/e est supérieur à 5, de préférence supérieur à 7.

4. Article culinaire (1) selon l'une des revendications 1 à 3, **caractérisé en ce que** les deux lames métalliques (11, 12) sont agencées dans une rainure (5) de réception réalisée sur la face externe (7) de la calotte (2) par une opération de frappe.

5. Article culinaire (1) selon la revendication 4, **caractérisé en ce que** les deux lames métalliques (11, 12) du thermocouple (10) sont agencées cote à cote dans la rainure (5).

6. Article culinaire (1) selon l'une des revendications 1 à 5, **caractérisé en ce que** le thermocouple (10) comporte une zone de jonction (17) des deux lames métalliques (11, 12) réalisée par soudure et **en ce que** les lames métalliques (11, 12) ainsi que la zone de jonction (17) sont isolées électriquement par un matériau résistant à une température supérieure à 350°C, notamment du polytétrafluoroéthylène (PTFE).

7. Article culinaire (1) selon la revendication 6, **caractérisé en ce que** le matériau isolant électriquement les lames métalliques (11, 12) ainsi que la zone de jonction (17) est déposé par enduction.

8. Article culinaire (1) selon l'une des revendications 1 à 7, **caractérisé en ce que** les lames métalliques (11, 12) comportent deux extrémités libres (18, 19) munies de zones de contact (21, 22, 210, 220) électrique reliées à des bornes (41, 42) d'un circuit électronique (40) qui traite la grandeur mesurée par le thermocouple (10) et la convertit en une température, ledit circuit électronique (40) étant agencé sur une poignée (30).

9. Article culinaire (1) selon la revendication 8, **caractérisé en ce que** la poignée (30) comporte une extrémité (31) fixée à la paroi latérale (4) et les bornes (41, 42) du circuit électronique (40) sont agencées à l'extrémité (31) de la poignée (30).

10. Article culinaire (1) selon l'une des revendications 8 à 9, **caractérisé en ce que** les extrémités libres (18, 19) des lames métalliques (11, 12) comportent une succession de plis formant les moyens de rappel élastique des zones de contact (210, 220) à l'encontre des bornes (41, 42).

11. Article culinaire (1) selon l'une des revendications 8 à 10, **caractérisé en ce que** les zones de contact (21, 22, 210, 220) des lames métalliques (11, 12) sont recouvertes d'un matériau bon conducteur électrique résistant à la corrosion, notamment de l'or.

12. Article culinaire (1) selon l'une des revendications 1 à 11, **caractérisé en ce qu'**il comporte deux thermocouples (10) agencés dans la rainure (5), les lames métalliques (11, 12) isolées respectives des thermocouples (10) étant superposées.

13. Article culinaire (1) selon l'une des revendications 1 à 12, **caractérisé en ce qu'**il est une poêle, une casserole, une sauteuse, un faitout ou un autocuiseur.

## Patentansprüche

1. Kochgeschirr (1) mit einer Kalotte (2), die einen Boden (3) und eine Seitenwand (4) aufweist, einer Lochplatte (6), die an einer Außenseite (7) der Kalotte (2) befestigt ist, und einem Thermoelement (10), das zwei isolierte und zwischen der Außenseite (7) der Kalotte (2) und der Lochplatte (6) angeordnete leitende Elemente (11, 12) umfasst, wobei sich das genannte Thermoelement (10) vom Boden (3) zur Seitenwand (4) erstreckt, **dadurch gekennzeichnet, dass** die beiden leitenden Elemente aus zwei Metalllamellen (11, 12) bestehen, die einen rechteckigen Querschnitt mit einer Dicke e zwischen 0,1 und 0,5 mm aufweisen.

2. Kochgeschirr (1) nach Anspruch 1, **dadurch gekennzeichnet, dass** die Dicke e der Metalllamellen (11,12) 0,3 mm beträgt.

3. Kochgeschirr (1) nach einem der Ansprüche 1 bis 2, **dadurch gekennzeichnet, dass** der rechteckige Querschnitt der Metalllamellen (11, 12) eine Breite l aufweist und dass das Verhältnis l/e größer als 5 und vorzugsweise größer als 7 ist.

4. Kochgeschirr (1) nach einem der Ansprüche 1 bis 3, **dadurch gekennzeichnet, dass** die beiden Metalllamellen (11, 12) in einer Aufnahmerille (5) angeordnet sind, die an der Außenseite (7) der Kalotte (2) durch einen Prägevorgang ausgeführt wird.

5. Kochgeschirr (1) nach Anspruch 4, **dadurch gekennzeichnet, dass** die beiden Metalllamellen (11, 12) des Thermoelements (10) Seite an Seite in der Rille (5) angeordnet sind.

6. Kochgeschirr (1) nach einem der Ansprüche 1 bis 5, **dadurch gekennzeichnet, dass** das Thermoelement (10) einen Verbindungsbereich (17) der beiden Metalllamellen (11, 12) aufweist, der durch Schweißung ausgeführt wird, und dass die Metalllamellen (11, 12) sowie der Verbindungsbereich (17) durch einen Temperaturen über 350 °C widerstehenden Werkstoff, insbesondere Polytetrafluorethylen (PTFE), elektrisch isoliert sind.

7. Kochgeschirr (1) nach Anspruch 6, **dadurch gekennzeichnet, dass** der die Metalllamellen (11, 12) sowie den Verbindungsbereich (17) elektrisch isolierende Werkstoff durch Beschichten aufgebracht wird.

8. Kochgeschirr (1) nach einem der Ansprüche 1 bis 7, **dadurch gekennzeichnet, dass** die Metalllamellen (11, 12) zwei freie Enden (18, 19) aufweisen, die mit elektrischen Kontaktbereichen (21, 22, 210, 220) ausgestattet sind, die mit Anschlüssen (41, 42) einer elektronischen Schaltung (40) verbunden sind, die die von dem Thermoelement (10) gemessene Größe verarbeitet und in eine Temperatur umwandelt, wobei sich die genannte elektronische Schaltung (40) an einem Griff (30) befindet.

9. Kochgeschirr (1) nach Anspruch 8, **dadurch gekennzeichnet, dass** der Griff (30) ein Ende (31) aufweist, das an der Seitenwand (4) befestigt ist, und dass sich die Anschlüsse (41, 42) der elektronischen Schaltung (40) am Ende (31) des Griffs (30) befinden.

10. Kochgeschirr (1) nach einem der Ansprüche 8 bis 9, **dadurch gekennzeichnet, dass** die freien Enden (18, 19) der Metalllamellen (11, 12) eine Folge von Falten aufweisen, die Mittel zur elastischen Rückstellung der Kontaktbereiche (210, 220) gegen die Anschlüsse (41, 42) bilden.

11. Kochgeschirr (1) nach einem der Ansprüche 8 bis 10, **dadurch gekennzeichnet, dass** die Kontaktbereiche (21, 22, 210, 220) der Metalllamellen (11, 12) mit einem elektrisch gut leitenden, korrosionsbeständigen Werkstoff, insbesondere Gold, beschichtet sind.

12. Kochgeschirr (1) nach einem der Ansprüche 1 bis 11, **dadurch gekennzeichnet, dass** es zwei Thermoelemente (10) umfasst, die in der Rille (5) angeordnet sind, wobei die jeweiligen isolierten Metalllamellen (11, 12) der Thermoelemente (10) übereinanderliegen.

13. Kochgeschirr (1) nach einem der Ansprüche 1 bis 12, **dadurch gekennzeichnet, dass** es sich um eine Pfanne, eine Kasserolle, einen Schmortopf, einen Kochtopf oder einen Schnellkochtopf handelt.

## Claims

1. Culinary article (1) including a cap (2) comprising a bottom (3) and a side wall (4), a perforated plate (6) fixed on an outer side (7) of the cap (2) and a thermocouple (10) comprising two insulated conducting elements (11, 12) arranged between the outer side (7) of the cap (2) and the perforated plate (6), said thermocouple (10) extending from the bottom (3) to the side wall (4), **characterised in that** the two conducting elements consist of two metallic strips (11, 12) having a rectangular cross-section of thickness e between 0.1 and 0.5 millimetres.

2. Culinary article (1) according to claim 1, **characterised in that** the thickness e of the metallic strips (11, 12) is equal to 0.3 millimetres.

3. Culinary article (1) according to claim 1 or 2, **characterised in that** the rectangular cross-section of the metallic strips (11, 12) has a width l, and **in that** the ratio l/e is greater than 5, preferably greater than 7.

4. Culinary article (1) according to one of claims 1 to 3, **characterised in that** the two metallic strips (11, 12) are arranged in a reception groove (5) formed on the outer side (7) of the cap (2) by a stamping operation.

5. Culinary article (1) according to claim 4, **characterised in that** the two metallic strips (11, 12) of the thermocouple (10) are arranged side by side in the groove (5).

6. Culinary article (1) according to one of claims 1 to 5, **characterised in that** the thermocouple (10) comprises a junction zone (17) of the two metallic strips (11, 12) formed by welding and **in that** the metallic strips (11, 12) and the junction zone (17) are electrically insulated by a material resistant to a temperature above 350 °C, in particular polytetrafluoroethylene (PTFE).

7. Culinary article (1) according to claim 6, **characterised in that** the material electrically insulating the metallic strips (11, 12) and the junction zone (17) is deposited by coating.

8. Culinary article (1) according to one of claims 1 to 7, **characterised in that** the metallic strips (11, 12) comprise two free ends (18, 19) provided with electrical contact zones (21, 22, 210, 220) connected to terminals (41, 42) of an electronic circuit (40) which processes the quantity measured by the thermocouple (10) and converts it into a temperature, said electronic circuit (40) being arranged on a handle (30).

9. Culinary article (1) according to claim 8, **characterised in that** the handle (30) comprises an end (31) attached to the side wall (4) and the terminals (41, 42) of the electronic circuit (40) are arranged at the end (31) of the handle (30).

10. Culinary article (1) according to claim 8 or 9, **characterised in that** the free ends (18, 19) of the metallic strips (11, 12) comprise a succession of folds forming the elastic return means used to press the contact zones (210, 220) against the terminals (41, 42).

11. Culinary article (1) according to one of claims 8 to 10, **characterised in that** the contact zones (21, 22, 210, 220) of the metallic strips (11, 12) are covered with a good electrical conductor resistant to corrosion, in particular gold.

12. Culinary article (1) according to one of claims 1 to 11, **characterised in that** it comprises two thermocouples (10) arranged in the groove (5), the respective insulated metallic strips (11, 12) of the thermocouples (10) being superimposed.

13. Culinary article (1) according to one of claims 1 to 12, **characterised in that** it is a frying pan, a pan, a sauté pan, a stewpot or a pressure cooker.
